# FASCICULE DE BREVET EUROPEEN

(11) **EP 3 383 770 B1**
(45) Date de publication et mention de la délivrance du brevet: **05.02.2020**
(21) Numéro de dépôt: 16806045.7
(22) Date de dépôt: 01.12.2016
(51) Int. Cl.: B65G 43/08, B65G 47/34

(54) **INSTALLATION DE TRI D'ARTICLES COMPRENANT UN SYSTÈME DE DÉTECTION ET D'ANALYSE DE LA TRAJECTOIRE DES ARTICLES ET PROCÉDÉ DE TRI**
ARTIKELSORTIERANLAGE MIT EINEM SYSTEM ZUR DETEKTION UND ANALYSE DES WEGES VON ARTIKELN UND SORTIERVERFAHREN
ITEM SORTING FACILITY COMPRISING A SYSTEM FOR DETECTING AND ANALYSING THE PATH OF THE ITEMS, AND SORTING METHOD

(30) Priorité: 04.12.2015 FR 1561894
(43) Date de publication de la demande: 10.10.2018
(73) Titulaire: Fives Intralogistics S.A., 69520 Grigny (FR)
(72) Inventeur: ZAK, David, 69520 Grigny (FR)
(74) Mandataire: Lavoix
(86) Numéro de dépôt international: PCT/EP2016/079494
(87) Numéro de publication internationale: WO 2017/093433

(56) Documents cités:
- EP-A1- 1 216 938
- FR-A1- 3 011 537
- GB-A- 2 251 228
- JP-B2- 3 284 898
- US-A1- 2014 083 058
- US-A1- 2014 142 746

## Description

L'invention est relative au domaine des installations de tri d'articles, plus particulièrement celles équipées de chariots à bande croisée appelés en anglais *crossbelt*, de charriots à plateaux basculants appelés en anglais *tilt-trays,* ou trieur à sabots connus sous l'appellation anglaise de *shoe-sorters.*

Les installations de tri d'articles, comme les colis et les paquets, sont en partie constituées d'équipements appelés trieurs. Ces trieurs sont par exemple constitués de chariots reliés entre eux de manière articulée pour former un train qui circule en boucle sur un parcours constituant un circuit. En général, les chariots forment une chaîne à intervalles réguliers. On utilise notamment ces installations de tri dans le secteur de la distribution, pour préparer les commandes destinées aux points de vente ou directement aux clients.

Les articles sont introduits par des stations de chargement automatiques sur les chariots ou éventuellement sur des convoyeurs à rouleaux. Ces chariots transportent les articles vers des sorties correspondant à des zones de prises en charge ou des zones d'expédition. Le passage de l'article du chariot vers la sortie est actuellement une action qui demande à être réglée manuellement pour assurer une bonne prise en charge de l'article et éviter des congestions ou des détériorations d'articles lors de ce transfert.

Les installations de tri sont amenées à gérer une large gamme d'articles avec des poids pouvant aller jusqu'à 50 kg, et des formes ou des volumes variés avec des vitesses de déplacement des chariots pouvant atteindre 3 m/s. Le réglage de l'éjection des articles est une opération complexe.

Pour mieux comprendre l'opération, il convient d'expliquer le principe d'éjection d'un colis depuis une installation de tri équipées de chariot à bande croisée, de type *crossbelt,* bien que la présente invention ne soit pas limitée dans son champ d'application et permette les mêmes opérations sur une installation utilisant des trieurs de type *shoe-sorter* ou *tilt-tray,* ou tout autre dispositif connu de tri d'articles.

Pour éjecter un article d'un chariot à bande croisée, la bande croisée du chariot est mise en mouvement par un moteur, ce qui provoque l'éjection de l'article perpendiculairement ou avec un angle sensiblement aigu par rapport au sens de la marche du chariot sur la bande de roulement de l'installation. Cette éjection est initiée par un dispositif électronique, appelé antenne de déclenchement, disposée au droit de chaque sortie.

L'emplacement de cet équipement est défini à l'étude du projet d'installation et il est ajusté sur site en fonction de la position réelle des sorties. Cette éjection doit permettre de positionner correctement les articles dans les sorties, c'est-à-dire de leur donner une trajectoire compatible avec la forme et les dimensions de la sortie. Les sorties sont des dispositifs de réception, par exemple des convoyeurs à rouleaux, des chutes, des chutes en spirale, des paniers...

Lorsque que les articles changent de nature, il est parfois nécessaire de procéder à des ajustements - par tests successifs avec la sortie d'articles plus ou moins gros, et plus ou moins lourds - afin d'ajuster la position d'éjection. On utilise communément des antennes de déclenchement qui transmettent par des signaux infrarouges au chariot des ordres de déclenchement. A la place de ces antennes, il est également possible d'utiliser la position théorique exprimé en pas et en temps, pour indiquer à un chariot à quelle sortie il doit éjecter l'article.

Des ajustements peuvent être opérés mécaniquement en déplaçant l'antenne de déclenchement de l'éjection, ou par logiciel, en utilisant un décalage de déclenchement appelé *offset* en anglais (retardement logiciel du moment de déchargement) en fonction de l'importance de la correction à apporter. Afin de procéder au réglage de balistique, il convient de faire passer des articles de type et de caractéristiques différents dans chacune des sorties afin de régler empiriquement le décalage de déclenchement jusqu'à ce que l'opérateur ou metteur en service observe un comportement acceptable. Seule l'expérience permet un bon réglage qui est basé sur un ressenti de l'opérateur. Le réglage est non reproductible et aléatoire d'une installation à l'autre.

De plus, aucune mesure fiable ne peut servir de référence pour un contrôle ultérieur ou pour détecter une dérive. Aucun diagnostic en temps réel n'est possible, ce qui interdit toute alerte ou correction d'erreur automatique. Le réglage de la balistique d'un trieur est donc une opération à la fois longue et complexe, reposant essentiellement sur l'expérience du metteur en route, car manuelle.

A titre d'exemple dans l'état de la technique, on peut citer le document US 2014/142746 A1 qui divulgue une installation de tri d'articles selon le préambule de la revendication 1 et un procédé de tri d'articles selon le préambule de la revendication 7.

La présente invention vise donc à pallier les inconvénients précités, en proposant une installation de tri et un procédé permettant d'améliorer le réglage initial de l'éjection des articles et de maintenir un réglage correct ultérieurement.

Ainsi l'invention a pour objet, selon un premier aspect, une installation de tri d'articles comprenant :
- au moins un convoyeur formant une voie de circulation pour les articles, le convoyeur comportant des supports adaptés pour porter les articles, et
- au moins un dispositif récepteur, les supports étant en outre adaptés pour éjecter successivement au moins certains des articles dans ou sur le dispositif récepteur, les articles éjectés décrivant des trajectoires réelles par rapport au dispositif récepteur, les trajectoires réelles étant susceptibles d'appartenir à un ensemble prédéfini de trajectoires potentielles considérées comme incorrectes,
comprenant en outre :
- un détecteur adapté pour fournir des informations primaires relatives respectivement aux trajectoires réelles, et
- un analyseur adapté pour utiliser lesdites informations primaires et produire au moins une information secondaire représentative de l'appartenance d'au moins une des trajectoires réelles à l'ensemble prédéfini.

Suivant certains modes de réalisation, l'installation comprend en outre une ou plusieurs des caractéristiques suivantes, prise(s) isolément ou suivant toutes les combinaisons techniquement possibles :
- le détecteur comprend au moins un dispositif pris parmi une caméra, un capteur infrarouge, un capteur à ultrasons, et un laser, ou une combinaison de ces dispositifs ;
- les informations primaires sont des images ou des films, et l'analyseur comprend un moyen de calcul ou un ordinateur adaptés pour réaliser une analyse desdites images ou desdits films, l'information secondaire étant un résultat de l'analyse ;
- l'installation comprend en outre un système de contrôle adapté pour recevoir l'information secondaire et pour modifier au moins un paramètre de fonctionnement du convoyeur en utilisant l'information secondaire, les trajectoires réelles étant modifiées après ladite modification du paramètre de façon à ne plus appartenir à l'ensemble prédéfini ;
- le paramètre de fonctionnement du convoyeur est adapté pour modifier :
   - une vitesse d'éjection d'au moins un des articles par rapport au dispositif récepteur,
   - un instant de déclenchement de l'éjection d'au moins un des articles,
   - un laps de temps entre ledit instant de déclenchement et une référence de temps, ou
   - une vitesse de déplacement d'au moins un des supports par rapport au dispositif récepteur ; et
- l'installation comprend un capteur adapté pour fournir ladite référence de temps ou le système de contrôle est adapté pour fournir ladite référence de temps.

L'invention a également pour objet, selon un deuxième aspect, un procédé de tri d'articles comprenant les étapes suivantes :
- fourniture d'au moins un convoyeur formant une voie de circulation pour les articles, le convoyeur comportant des supports adaptés pour porter les articles,
- fourniture d'au moins un dispositif récepteur,
- éjection successive d'au moins certains des articles par les supports dans ou sur le dispositif récepteur, les articles éjectés décrivant des trajectoires réelles par rapport au dispositif récepteur,
- fourniture d'un ensemble prédéfini de trajectoires potentielles considérées comme incorrectes, les trajectoires réelles étant susceptibles d'appartenir à l'ensemble prédéfini,
- détection pour fournir des informations primaires relatives respectivement aux trajectoires réelles, et
- analyse des trajectoires réelles à partir des informations primaires et obtention d'une information secondaire représentative de l'appartenance d'au moins une des trajectoires réelles à l'ensemble prédéfini.

Suivant certains modes de réalisation, le procédé comprend en outre une ou plusieurs des caractéristiques suivantes, prise(s) isolément ou suivant toutes les combinaisons techniques possibles :
- l'étape de fourniture de l'ensemble prédéfini comprend les sous-étapes suivantes :
   - enregistrement d'une des trajectoires réelles, la trajectoire enregistrée étant considérée comme correcte, et
   - calcul de l'ensemble prédéfini à partir de la trajectoire enregistrée et d'un seuil de tolérance représentatif d'un écart maximal entre les trajectoires réelles et la trajectoire enregistrée ;
- l'étape de fourniture de l'ensemble prédéfini comprend l'utilisation d'une interface graphique par un opérateur ;
- le procédé comprend en outre une étape de modification d'au moins un paramètre de fonctionnement du convoyeur en fonction de l'information secondaire, les trajectoires réelles étant modifiées après ladite modification du paramètre de façon à ne plus appartenir à l'ensemble prédéfini ; et
- dans l'étape de modification d'au moins un paramètre de fonctionnement du convoyeur, au moins une caractéristique physique d'au moins l'un des articles est utilisée pour modifier ledit paramètre de fonctionnement.

Les caractéristiques et avantages de l'invention apparaîtront à la lecture de la description qui va suivre, donnée uniquement à titre d'exemple, et non limitative, en référence aux dessins annexés, sur lesquels :
- la figure 1 est une représentation schématique, en vue de dessus, d'une installation selon l'invention ; et
- la figure 2 est une vue du dessus d'une partie de l'installation représentée sur la figure 1, montrant notamment deux dispositifs de réception.

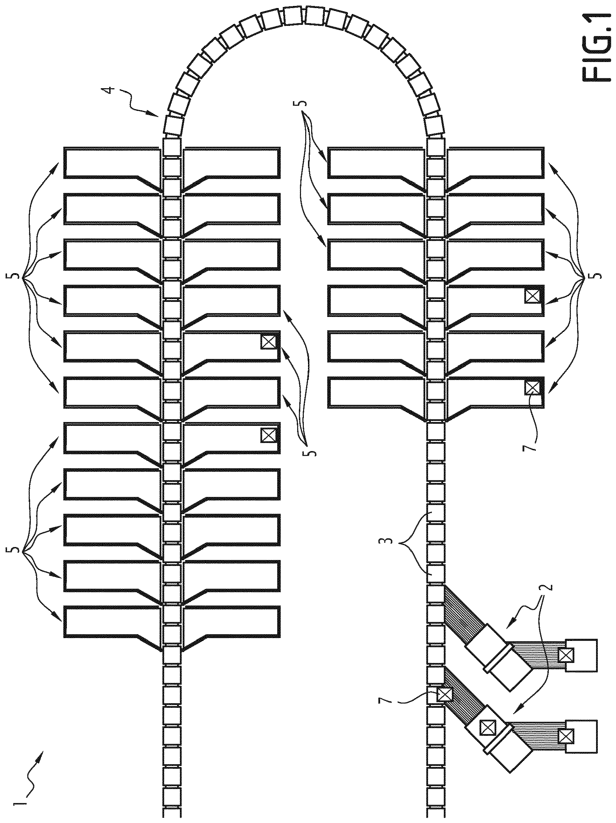

En référence à la figure 1, on décrit une installation 1 de tri d'articles 7. L'installation 1 est par exemple de type *cross-belt* (à chariots à bande croisée).

En variante, l'installation 1 est par exemple du type *tilt-tray* ou *shoe-sorter.*

L'installation 1 comprend un convoyeur 4, des stations de chargement automatiques 2 pour transférer les articles 7 sur le convoyeur, et dispositifs récepteurs 5 de collecte des articles 7 triés en fonction de destinations correspondant respectivement aux dispositifs récepteurs.

Les articles 7 sont par exemple des colis, des bacs, des objets emballés ou non, des lettres ou des paquets, des bacs plastiques, des pneumatiques, des objets plats, des liasses, des lettres, ou des produits manufacturés dans leur emballage.

Le convoyeur 4 forme une voie sur laquelle les articles 7 circulent avant de passer respectivement dans l'un des dispositifs récepteur 5. Dans l'exemple représenté, le convoyeur 4 présente une forme en « U » en vue de dessus. Le convoyeur 4 comporte des supports 3 successifs adaptés pour porter les articles 7, avantageusement régulièrement espacés le long de la voie de circulation. Le convoyeur 4 est par exemple de type *cross-belt.* La voie de circulation définit localement une direction longitudinale L et un sens de circulation.

Les supports 3 forment une chaîne qui se déplace sur la voie de circulation formée par le convoyeur 4. Les supports 3 sont par exemple des chariots. Chaque chariot possède une bande 10 dite « croisée », car orientée selon une direction transversale T.

Les supports 3 sont adaptés pour éjecter les articles 7 latéralement par rapport au convoyeur sur l'un des dispositifs récepteurs 5. Chaque article 7 éjecté décrit une trajectoire réelle Tr par rapport au dispositif récepteur 5 sur lequel il est éjecté. Les trajectoires réelles Tr appartiennent soit à un ensemble prédéfini Tr-In de trajectoires potentielles considérées comme correctes ou acceptables, soit à un ensemble prédéfini Tr-Out de trajectoires potentielles considérées comme incorrectes ou non acceptables.

Le caractère correct ou non des trajectoires provient par exemple du fait qu'on veut éviter que les articles subissent des chocs dangereux pour leur contenu, ou bien pour éviter un coincement d'articles 7 à l'entrée ou sur les dispositifs récepteurs 5. Plus généralement, une trajectoire « correcte » est une trajectoire permettant un acheminement sans encombre de l'article 7 via le dispositif récepteur 5.

Dans l'exemple représenté, la direction transversale T forme un angle droit avec la direction longitudinale. En variante (non représentée), la direction transversale T forme un angle aigu avec la direction longitudinale L.

L'installation 1 comprend aussi un détecteur 61 adapté pour fournir des informations primaires relatives respectivement aux trajectoires réelles Tr des articles 7, et un analyseur 6 adapté pour utiliser lesdites informations primaires et produire au moins une information secondaire représentative de l'appartenance d'au moins une des trajectoires réelles Tr à l'ensemble prédéfini Tr-Out.

L'installation 1 comprend un système de contrôle 8 adapté pour recevoir l'information secondaire et pour modifier au moins un paramètre de fonctionnement du convoyeur 4. Les trajectoires réelles Tr sont modifiées après la modification du paramètre de façon à ne plus appartenir à l'ensemble prédéfini Tr-Out, c'est-à-dire pour redevenir acceptables.

Par « modifier » un paramètre de fonctionnement, on entend ici calculer une nouvelle valeur pour ce paramètre, la nouvelle valeur étant imposée au convoyeur 4 par le système de contrôle 8, par exemple sous forme d'une nouvelle consigne.

Le paramètre de fonctionnement est par exemple représentatif :
- d'une vitesse d'éjection d'au moins un des articles 7 par rapport au dispositif récepteur 5,
- D'une accélération à appliquer a au moins un des articles 7 par le moteur de l'équipement 10,
- d'un instant de déclenchement de l'éjection de l'article 7,
- d'un laps de temps, ou offset, entre ledit instant de déclenchement et une référence de temps, et/ou
- d'une vitesse de déplacement du support 3 par rapport au dispositif récepteur 5.

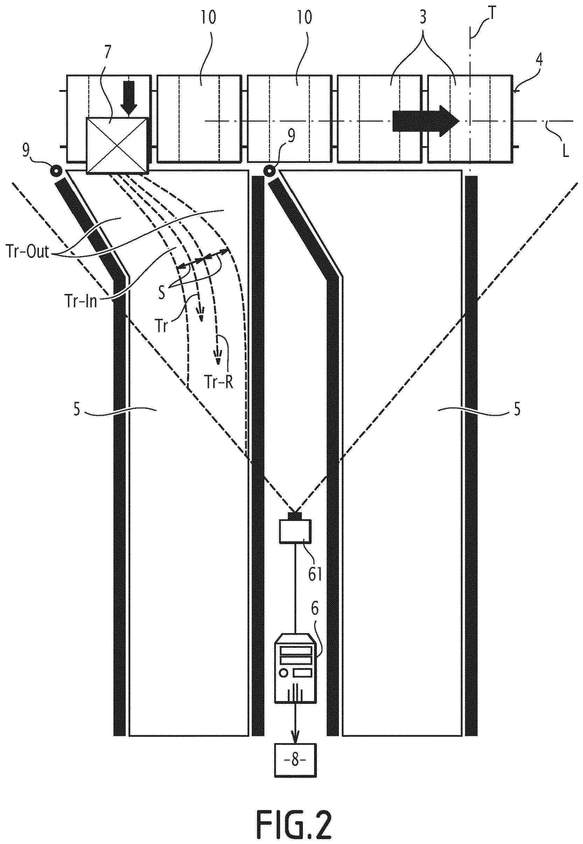

La figure 2 montre deux dispositifs de réception 5, que nous appellerons également « sorties », en référence au convoyeur 4. Le convoyeur 4 passe devant les sorties 5. Les sorties 5 sont munies d'antennes de déclenchement 9 disposées à l'entrée de chaque sortie 5, du côté amont selon le sens de circulation du convoyeur 4. Les sorties 5 comporte en outre, par exemple, une rampe s'étendant transversalement à partir du convoyeur 4, sur laquelle les articles 7 glissent.

Lorsque qu'un article 7, transporté par un support 3, arrive au niveau de l'antenne de déclenchement 9, un moteur (non représenté) de la bande croisée du support fait tourner la bande croisée pour éjecter l'article 7 dans sa sortie 5 de destination.

L'antenne 9 fournit en l'occurrence ladite référence de temps pour le déclenchement de l'éjection.

Selon une variante, le système de contrôle 8 est adapté pour fournir ladite référence de temps.

Le détecteur 61 permet d'observer la trajectoire réelle Tr de l'article 7 sur la sortie 5. Le détecteur 61 est par exemple une caméra et l'information primaire est une image, une pluralité d'images, ou un film.

En variante, le détecteur 61 est tout autre capteur également adapté pour localiser l'article 7 par rapport au dispositif récepteur 5 emprunté, en tous cas suffisamment pour déterminer si la trajectoire réelle Tr appartient à l'ensemble prédéfini Tr-In ou à l'ensemble prédéfini Tr-Out. Le détecteur 61 est par exemple un capteur infrarouge, un laser ou une combinaison de ces capteurs. Le détecteur 61 comprend par exemple plusieurs capteurs d'une même sorte, fonctionnant par exemple successivement ou par triangulation.

Le détecteur 61, dans l'exemple une caméra, est par exemple situé longitudinalement entre deux dispositifs récepteurs 5 consécutifs, de sorte que le détecteur est capable de fournir des informations relatives aux trajectoires réelles sur les deux dispositifs récepteurs 5 qui lui sont adjacents. L'utilisation d'une caméra vidéo est particulièrement avantageuse pour visualiser les trajectoires réelles Tr des articles 7 sur les sorties 5.

L'analyseur 6 comprend avantageusement un moyen de calcul visant à déterminer la trajectoire réelle Tr, et par exemple une vitesse V de l'article 7 par rapport à la sortie 5 empruntée, notamment au moment de l'éjection. Ce moyen de calcul est par exemple un ordinateur équipé d'un logiciel adéquat, un automate programmable, ou une carte électronique dédiée à la détermination des trajectoires et des vitesses des articles 7.

Le détecteur 61 ou l'analyseur 6 peuvent également sauvegarder des images ou des vidéos des articles 7 passant sur les sorties 5. Un examen *a posteriori* de ces archives peut être réalisé pour comprendre le comportement de certains articles 7 et leur trajectoire réelle Tr.

L'analyseur 6 analyse l'information primaire et produit au moins une information secondaire représentative de l'appartenance de la trajectoire réelle Tr à l'ensemble prédéfini Tr-In ou à l'ensemble prédéfini Tr-Out.

L'ensemble prédéfini Tr-In et l'ensemble prédéfini Tr-Out sont par exemple définis par l'opérateur directement dans l'analyseur 6. Cette définition peut être réalisée en fonction de paramètres techniques des sorties 5 et de caractéristiques moyennes des articles 7, ou provient d'un processus itératif de paramétrage par un opérateur (non représenté) utilisant l'analyseur 6.

L'opérateur peut notamment enregistrer une trajectoire réelle de référence Tr-R d'un article 7 qu'il considère acceptable, et généraliser cette trajectoire réelle de référence en y ajoutant un seuil de tolérance S. L'ensemble prédéfini Tr-In est alors défini comme l'ensemble des trajectoires potentielles présentant avec la trajectoire réelle de référence Tr-R un écart inférieur ou égal au seuil de tolérance S. L'ensemble prédéfini Tr-out contient les trajectoires potentielles qui présentent un écart strictement supérieur au seuil de tolérance S.

Selon une variante, l'opérateur peut également indiquer à l'analyseur 6 des zones à éviter sur les sorties 5 grâce à une interface graphique de l'analyseur 6 représentant les sorties 5. Dans ce cas, l'opérateur sélectionne les trajectoires potentielles appartenant à l'ensemble prédéfini Tr-In, et/ou les trajectoires potentielles appartenant à l'ensemble prédéfini Tr-Out.

Une fois que l'ensemble prédéfini Tr-In et l'ensemble prédéfini Tr-Out sont définis pour chaque sortie 5 ou par type de sorties 5, des articles 7 de différentes tailles sont avantageusement introduits dans l'installation 1 pour tester et régler les offsets ou décalages de déclenchement par rapport aux antennes 9.

Habituellement, ce travail est réalisé par un metteur en route expérimenté qui réalise des essais successifs. Avantageusement, l'invention permet de régler l'offset ou décalage de déclenchement de l'éjection des articles 7 automatiquement ou manuellement en fonction des informations remontées par l'analyseur 6.

Si la trajectoire réelle Tr d'un des articles 7 dans l'une des sorties 5 est en dehors de l'ensemble prédéfini Tr-In, l'analyseur 6 transmet cette information au système de contrôle 8 de l'installation 1 afin qu'un réglage soit effectué pour ramener la trajectoire réelle Tr des articles 7 suivants dans l'ensemble prédéfini Tr-In. Ce réglage est réalisé par un opérateur, ou automatiquement par le système de contrôle 8. L'installation 1 selon l'invention peut donc agir en boucle fermée sur son fonctionnement pour corriger en dynamique la balistique observée lors de l'éjection des articles 7.

Suivant un paramètre physique, tel qu'une dimension ou la masse des articles 7 considérés, la trajectoire réelle Tr peut varier. Il est possible d'anticiper la trajectoire réelle Tr en fonction de la taille de l'article 7 ou de sa masse. Avantageusement, on définit l'ensemble prédéfini Tr-in en fonction d'une taille moyenne d'articles 7 ou de la taille de l'article 7 considéré. Le poids unitaire de chaque article 7, mesuré de façon optionnelle sur les stations de chargement 2 de l'installation 1, peut être utilisé pour l'analyse de la trajectoire et permet d'optimiser également la balistique par analyse statistique. Les différents schémas de trajectoire réelle Tr en fonction du poids et de la taille des articles 7 peuvent donc être configurés afin que les réglages d'éjection des articles 7 les prennent en compte.

Si une dérive de la trajectoire réelle Tr, définie par exemple comme le franchissement d'un seuil dans le nombre d'articles 7 en dehors de l'ensemble prédéfini Tr-In, est repérée par le détecteur 61 et l'analyseur 6, le système de contrôle 8 permet par exemple :
- de compenser automatiquement cette dérive par ajustement automatique de l'offset tout en alertant l'opérateur de cette dérive,
- de lever une demande d'intervention de façon automatique si le processus de d'ajustement de l'offset n'est pas suffisant pour un retour à une situation normale,
- d'adapter en dynamique le comportement de l'installation 1 en fonction de la production. Ainsi, l'installation 1 devient plus versatile, puisqu'elle permet une certaine latitude de son utilisation sans nécessiter d'intervention lourde et complexe (par exemple, dans la grande distribution avec des vacations du matin comportant des petits colis légers et des vacations du soir avec des gros colis lourd ayant un comportement dynamique très différent),
- de détecter un comportement anormal de l'installation 1 ou tout simplement d'un article 7 difficilement mécanisable (article roulant) et de lancer des alertes ou des actions de corrections pour obtenir à un fonctionnement optimal,
- de corriger automatiquement l'offset de déclenchement de l'éjection pour tenir compte d'un dysfonctionnement, notamment l'usure d'une bande croisée ou l'usure d'un moteur de bande croisée. Les performances de l'installation 1 sont ainsi maintenues même en cas d'incident ou d'usure. Au-delà d'un certain seuil d'articles 7 dont les trajectoires réelles appartiennent à l'ensemble prédéfini Tr-Out, la sortie 5 ou le support 3 en défaut sont par exemple désactivés, car inopérants, et une alerte émise pour déclencher une opération de maintenance. Des sorties de secours (plus larges, plus tolérantes) sont avantageusement prévues dans ce cas afin de recevoir les articles 7 destinés à la sortie 5 défectueuse, et/ou
- de lever une alerte permettant d'indiquer à l'opérateur qu'une correction a pu être réalisée automatiquement par le système de contrôle 8, ou qu'une opération de maintenance est nécessaire, aucune correction automatique ne pouvant plus être mise en œuvre.

Selon un autre exemple de réalisation de l'invention, l'installation 1 utilise des antennes digitales de déclenchement permettant de passer, en dynamique, différentes consignes d'accélération aux supports 3 en plus des consignes d'éjection. Ceci permet, après analyse des trajectoires réelles Tr, de corriger la balistique de façon encore plus fine. En effet, il est alors possible de réaliser un réglage sur l'offset de déclenchement et un réglage sur la vitesse d'éjection et/ou de l'accélération de l'article 7 par le support 3 pour obtenir une trajectoire réelle Tr comprise dans l'ensemble prédéfini Tr-In.

Il est également possible d'agir sur la vitesse du support 3 par rapport à la sortie 5 pour obtenir une vitesse compatible avec un article 7 particulièrement délicat à éjecter, par exemple un article très lourd dont l'inertie impliquerait nécessairement une mauvaise trajectoire de sortie. Par exemple, une réduction de cette vitesse facilite en général une éjection correcte.

La présente invention permet également de s'adapter très facilement à une baisse de régime de l'installation 1. Afin de limiter la consommation énergétique de l'installation 1 lors telle baisse de régime, l'opérateur peut faire baisser la vitesse de défilement des supports 3 sur la voie de circulation. Cette baisse de vitesse est actuellement très compliquée à gérer, puisque cela a une incidence sur tous les offsets de déclenchement qu'il est nécessaire de régler. L'invention permet de faire ce réglage de manière automatique par une analyse des nouvelles trajectoires réelles Tr et en ajustant les offsets de déclenchement de l'éjection.

Afin de garantir une bonne surveillance des sorties 5 par l'analyseur 6, le nombre de détecteurs 61 est ajusté en fonction du nombre de sorties 5 à surveiller. Néanmoins, certaines technologies permettent aux détecteurs 61 de surveiller plusieurs sorties 5 en même temps. C'est le cas des caméras vidéo qui ont des angles d'action larges, comme représenté sur la figure 2. Un autre avantage de l'utilisation d'une caméra comme détecteur est de rendre possible la détection de fausses destinations de façon fiable. En effet, l'analyseur 6 peut effectuer le suivi d'un article 7 pour s'assurer que celui-ci atteint bien sa destination en passant par la sortie 5 prévue.

## Revendications

1. Installation (1) de tri d'articles (7) comprenant :
- au moins un convoyeur (4) formant une voie de circulation pour les articles (7), le convoyeur comportant des supports (3) adaptés pour porter les articles (7), et
- au moins un dispositif récepteur (5), les supports (3) étant en outre adaptés pour éjecter successivement au moins certains des articles (7) dans ou sur le dispositif récepteur (5), les articles (7) éjectés décrivant des trajectoires réelles (Tr) par rapport au dispositif récepteur (5), les trajectoires réelles (Tr) étant susceptibles d'appartenir à un ensemble prédéfini (Tr-Out) de trajectoires potentielles considérées comme incorrectes,
**caractérisée en ce qu'**elle comprend en outre :
- un détecteur (61) adapté pour fournir des informations primaires relatives respectivement aux trajectoires réelles (Tr), et
- un analyseur (6) adapté pour utiliser lesdites informations primaires et produire au moins une information secondaire représentative de l'appartenance d'au moins une des trajectoires réelles (Tr) à l'ensemble prédéfini (Tr-Out).

2. Installation (1) selon la revendication 1, **caractérisée en ce que** le détecteur (61) comprend au moins un dispositif pris parmi une caméra, un capteur infrarouge, un capteur à ultrasons, et un laser, ou une combinaison de ces dispositifs.

3. Installation (1) selon la revendication 1 ou 2, **caractérisée en ce que** :
- les informations primaires sont des images ou des films, et
- l'analyseur (6) comprend un moyen de calcul ou un ordinateur adaptés pour réaliser une analyse desdites images ou desdits films, l'information secondaire étant un résultat de l'analyse.

4. Installation (1) selon l'une quelconque des revendications 1 à 3, **caractérisée en ce qu'**elle comprend en outre un système de contrôle (8) adapté pour recevoir l'information secondaire et pour modifier au moins un paramètre de fonctionnement du convoyeur (4) en utilisant l'information secondaire, les trajectoires réelles (Tr) étant modifiées après ladite modification du paramètre de façon à ne plus appartenir à l'ensemble prédéfini (Tr-Out).

5. Installation (1) selon la revendication 4, **caractérisée en ce que** le paramètre de fonctionnement du convoyeur (4) est adapté pour modifier :
- une vitesse d'éjection d'au moins un des articles (7) par rapport au dispositif récepteur (5),
- un instant de déclenchement de l'éjection d'au moins un des articles (7),
- un laps de temps entre ledit instant de déclenchement et une référence de temps, ou
- une vitesse de déplacement d'au moins un des supports (3) par rapport au dispositif récepteur (5).

6. Installation (1) selon la revendication 5, **caractérisée en ce que** :
- elle comprend un capteur (9) adapté pour fournir ladite référence de temps ou
- le système de contrôle (8) est adapté pour fournir ladite référence de temps.

7. Procédé de tri d'articles (7) comprenant les étapes suivantes :
- fourniture d'au moins un convoyeur (4) formant une voie de circulation pour les articles (7), le convoyeur comportant des supports (3) adaptés pour porter les articles (7),
- fourniture d'au moins un dispositif récepteur (5),
- éjection successive d'au moins certains des articles (7) par les supports (3) dans ou sur le dispositif récepteur (5), les articles (7) éjectés décrivant des trajectoires réelles (Tr) par rapport au dispositif récepteur (5),
- fourniture d'un ensemble prédéfini (Tr-Out) de trajectoires potentielles considérées comme incorrectes, les trajectoires réelles (Tr) étant susceptibles d'appartenir à l'ensemble prédéfini (Tr-Out),
**caractérisé en ce que** ledit procédé comporte en outre les étapes suivantes :
- détection pour fournir des informations primaires relatives respectivement aux trajectoires réelles (Tr), et
- analyse des trajectoires réelles (Tr) à partir des informations primaires et obtention d'une information secondaire représentative de l'appartenance d'au moins une des trajectoires réelles (Tr) à l'ensemble prédéfini (Tr-Out).

8. Procédé selon la revendication 7, dans lequel l'étape de fourniture de l'ensemble prédéfini (Tr-Out) comprend les sous-étapes suivantes :
- enregistrement d'une des trajectoires réelles (Tr), la trajectoire enregistrée étant considérée comme correcte, et
- calcul de l'ensemble prédéfini (Tr-Out) à partir de la trajectoire enregistrée et d'un seuil de tolérance représentatif d'un écart maximal entre les trajectoires réelles (Tr) et la trajectoire enregistrée.

9. Procédé selon la revendication 7 ou 8, dans lequel l'étape de fourniture de l'ensemble prédéfini (Tr-Out) comprend l'utilisation d'une interface graphique par un opérateur.

10. Procédé selon l'une quelconque des revendications 7 à 9, comprenant en outre une étape de modification d'au moins un paramètre de fonctionnement du convoyeur (4) en fonction de l'information secondaire, les trajectoires réelles (Tr) étant modifiées après ladite modification du paramètre de façon à ne plus appartenir à l'ensemble prédéfini (Tr-Out).

11. Procédé selon la revendication 10, **caractérisé en ce que**, dans l'étape de modification d'au moins un paramètre de fonctionnement du convoyeur (4), au moins une caractéristique physique d'au moins l'un des articles (7) est utilisée pour modifier ledit paramètre de fonctionnement.

## Patentansprüche

1. Einrichtung (1) zum Sortieren von Artikeln (7), aufweisend:
- wenigstens eine Förderanlage (4), die einen Bewegungsweg für die Artikel (7) bildet, wobei die Förderanlage Träger (3) aufweist, die angepasst sind zum Tragen der Artikel (7), und
- wenigstens eine Empfang-Vorrichtung (5), wobei die Träger (3) ferner angepasst sind zum sukzessive Auswerfen wenigstens einiger der Artikel (7) in oder auf die Empfang-Vorrichtung (5), wobei die ausgeworfenen Artikel (7) reelle Bahnen (Tr) bezüglich der Empfang-Vorrichtung (5) beschreiben, wobei die reellen Bahnen (Tr) geeignet sind, einer vordefinierten Gruppe (Tr-Out) von potentiellen als unkorrekt betrachteten Bahnen zuzugehören,
**dadurch gekennzeichnet, dass** sie ferner aufweist:
- einen Detektor (61), der angepasst ist zum Bereitstellen von primären Informationen relativ jeweilig zu den reellen Bahnen (Tr), und
- eine Analysiereinrichtung (6), die angepasst ist zum Verwenden der besagten primären Informationen und Produzieren wenigstens einer sekundären Information, die repräsentativ ist für die Zugehörigkeit wenigstens einer der reellen Bahnen (Tr) zu der vordefinierten Gruppe (Tr-Out).

2. Einrichtung (1) gemäß Anspruch 1, **dadurch gekennzeichnet, dass** der Detektor (61) aufweist wenigstens eine Vorrichtung, die ausgewählt ist aus einer Kamera, einem Infrarot-Sensor, einem Ultraschall-Sensor und einem Laser, oder einer Kombination aus diesen Vorrichtungen.

3. Einrichtung (1) gemäß Anspruch 1 oder 2, **dadurch gekennzeichnet, dass**:
- die primären Informationen Bilder oder Filme sind, und
- die Analysiereinrichtung (6) ein Mittel zum Berechnen oder einen Computer aufweist, die angepasst sind zum Realisieren einer Analyse der besagten Bilder oder der besagten Filme, wobei die sekundäre Information ein Resultat der Analyse ist.

4. Einrichtung (1) gemäß irgendeinem der Ansprüche 1 bis 3, **dadurch gekennzeichnet, dass** sie ferner aufweist ein Steuersystem (8), das angepasst ist zum Empfangen der sekundären Information und zum Modifizieren wenigstens eines Betriebs-Parameters der Förderanlage (4) unter Verwenden der sekundären Information, wobei die reellen Bahnen (Tr) nach der besagten Modifikation des Parameters modifiziert werden in einer Weise, um nicht mehr der vordefinierten Gruppe (Tr-Out) zuzugehören.

5. Einrichtung (1) gemäß Anspruch 4, **dadurch gekennzeichnet, dass** der Betriebs-Parameter der Förderanlage (4) angepasst ist zum Modifizieren:
- einer Auswurfgeschwindigkeit für wenigstens einen der Artikel (7) bezüglich der Empfang-Vorrichtung (5),
- einen Zeitpunkt des Auslösens des Auswurfs wenigstens eines der Artikel (7),
- einer Zeitspanne zwischen dem besagten Zeitpunkt des Auslösens und einer Referenzzeit, oder
- einer Verlagerungsgeschwindigkeit von wenigstens einem der Träger (3) bezüglich der Empfang-Vorrichtung (5).

6. Einrichtung (1) gemäß Anspruch 5, **dadurch gekennzeichnet, dass**:
- sie aufweist einen Sensor (9), der angepasst ist zum Bereitstellen der besagten Referenzzeit oder
- das Steuersystem (8) angepasst ist zum Bereitstellen der besagten Referenzzeit.

7. Verfahren zum Sortieren von Artikeln (8), aufweisend die folgenden Schritte:
- Bereitstellen wenigstens einer Förderanlage (4), die einen Bewegungsweg für die Artikel (7) bildet, wobei die Förderanlage Träger (3) aufweist, die angepasst sind zum Tragen der Artikel (7),
- Bereitstellen wenigstens einer Empfang-Vorrichtung (5),
- sukzessives Auswerfen wenigstens einiger der Artikel (7) mittels der Träger (3) in oder auf die Empfang-Vorrichtung (5), wobei die ausgeworfenen Artikel (7) reelle Bahnen (Tr) bezüglich der Empfang-Vorrichtung (5) beschreiben,
- Bereitstellen einer vordefinierten Gruppe (Tr-Out) von potentiellen als unkorrekt betrachteten Bahnen, wobei die reellen Bahnen (Tr) geeignet sind, der vordefinierten Gruppe (Tr-Out) zuzugehören,
**dadurch gekennzeichnet, dass** das besagte Verfahren ferner die folgenden Schritte aufweist:
- Erfassen zum Bereitstellen von primären Informationen relativ jeweilig zu den reellen Bahnen (Tr) und
- Analysieren der reellen Bahnen (Tr) ausgehend von den primären Informationen und Erlangen einer sekundären Information, die repräsentativ ist für die Zugehörigkeit wenigstens einer der reellen Bahnen (Tr) zu der vordefinierten Gruppe (Tr-Out).

8. Verfahren gemäß Anspruch 7, wobei der Schritt des Bereitstellens der vordefinierten Gruppe (Tr-Out) die folgenden Unter-Schritte aufweist:
- Registrieren einer der reellen Bahnen (Tr), wobei die registrierte Bahn als korrekt betrachtet wird, und
- Berechnen der vordefinierten Gruppe (Tr-Out) ausgehend von der registrierten Bahn und von einer Toleranzgrenze, die repräsentativ ist für einen Maximalabstand zwischen den reellen Bahnen (Tr) und der registrierten Bahn.

9. Verfahren gemäß Anspruch 7 oder 8, wobei der Schritt des Bereitstellens der vordefinierten Gruppe (Tr-Out) aufweist das Verwenden einer grafischen Schnittstelle mittels eines Bedieners.

10. Verfahren gemäß irgendeinem der Ansprüche 7 bis 9, ferner aufweisend einen Schritt des Modifizierens wenigstens eines Betriebs-Parameters der Förderanlage (4) in Abhängigkeit von der sekundären Information, wobei die reellen Bahnen (Tr) nach der besagten Modifikation des Parameters modifiziert werden in einer Weise, um nicht mehr der vordefinierten Gruppe (Tr-Out) zuzugehören.

11. Verfahren gemäß Anspruch 10, **dadurch gekennzeichnet, dass** im Schritt des Modifizierens wenigstens eines Betriebs-Parameters der Förderanlage (4) wenigstens eine charakteristische Gestalt von wenigstens einem der Artikel (7) verwendet wird zum Modifizieren des besagten Betriebs-Parameters.

## Claims

1. A facility (1) for sorting items (7) comprising:
- at least one conveyor (4) forming a circulation path for the items (7), the conveyor including supports (3) designed to support the items (7), and
- at least one receiving device (5), the supports (3) also being designed to eject at least some of the items (7) in series into or onto the receiving device (5), the ejected items (7) describing actual paths (Tr) with respect to the receiving device (5), the actual paths (Tr) being capable of belonging to a predefined set (Tr-Out) of potential paths considered to be incorrect,
**characterised in that** it also comprises:
- a detector (61) designed to provide primary information relative to the actual paths (Tr), respectively, and
- an analyser (6) designed to use said primary information and to produce at least one piece of secondary information showing that at least one of the actual paths (Tr) belongs to the predefined set (Tr-Out).

2. The facility (1) according to claim 1, **characterised in that** the detector (61) comprises at least one device taken among a camera, an infrared sensor, an ultrasound sensor, and a laser, or a combination of these devices.

3. The facility (1) according to claim 1 or 2, **characterised in that**:
- the primary information is images or videos, and
- the analyser (6) comprises a calculation means or a computer designed to analyse said images or said videos, the secondary information being a result of the analysis.

4. The facility (1) according to any one of the claims 1 to 3, **characterised in that** it also comprises a control system (8) designed to receive the secondary information and to modify at least one operating parameter of the conveyor (4) by using the secondary information, the actual paths (Tr) being modified after said modification of the parameter so as to no longer belong to the predefined set (Tr-Out).

5. The facility (1) according to claim 4, **characterised in that** the operating parameter of the conveyor (4) is designed to modify:
- an ejection speed of at least one of the items (7) with respect to the receiving device (5),
- a time for triggering the ejection of at least one of the items (7),
- a time lapse between said triggering time and a time reference, or
- a speed of movement of at least one of the supports (3) with respect to the receiving device (5).

6. The facility (1) according to claim 5, **characterised in that**:
- it comprises a sensor (9) designed to provide said time reference or
- the control system (8) is designed to provide said time reference.

7. A method for sorting items (7) comprising the following steps:
- providing at least one conveyor (4) forming a circulation path for the items (7), the conveyor including supports (3) designed to support the items (7),
- providing at least one receiving device (5),
- ejecting at least some of the items (7) in series via the supports (3) into or onto the receiving device (5), the ejected items (7) describing actual paths (Tr) with respect to the receiving device (5),
- providing a predefined set (Tr-Out) of potential paths considered to be incorrect, the actual paths (Tr) being capable of belonging to the predefined set (Tr-Out),
**characterized in that** said method further comprises the following steps:
- detecting in order to provide primary information relating to the actual paths (Tr), respectively, and
- analysing the actual paths (Tr) from the primary information and obtaining secondary information showing that at least one of the actual paths (Tr) belongs to the predefined set (Tr-Out).

8. The method according to claim 7, wherein the step of providing the predefined set (Tr-Out) comprises the following sub-steps:
- storing one of the actual paths (Tr), the stored path being considered to be correct, and
- calculating the predefined set (Tr-Out) from the stored path and a tolerance threshold representing a maximum deviation between the actual paths (Tr) and the stored path.

9. The method according to claim 7 or 8, wherein the step of providing the predefined set (Tr-Out) comprises the use of a graphic interface by an operator.

10. The method according to any one of the claims 7 to 9, also comprising a step of modifying at least one operating parameter of the conveyor (4) as a function of the secondary information, the actual paths (Tr) being modified after said modification of the parameter so as to no longer belong to the predefined set (Tr-Out).

11. The method according to claim 10, **characterised in that**, in the step of modifying at least one operating parameter of the conveyor (4), at least one physical characteristic of at least one of the items (7) is used to modify said operating parameter.
